# EUROPEAN PATENT APPLICATION

(11) **EP 4 177 585 A1**
(43) Date of publication of application: **10.05.2023**
(21) Application number: 22197009.8
(22) Date of filing: 22.09.2022
(51) Int. Cl.: G01L 19/00, F16L 39/02

(54) **A HOSE ADAPTER**

(30) Priority: 09.11.2021 FI 20216153
(71) Applicant: Produal Oy, 48770 Kotka (FI)
(72) Inventor: Ilmasti, Aki, 01390 Vantaa (FI); Varila, Tommi, 40250 Jyväskylä (FI); Holappa, Juha, 02610 Espoo (FI); Uusitalo, Jyrki, 08700 Lohja (FI)
(74) Representative: Berggren Oy

(57) **Abstract**

The invention relates to a hose adapter for connecting hose connectors inside a housing of a pressure transmitter configured to be used for measuring pressures and pressure differences of a system. The hose adapter comprises two adjacent hoses and end plates for hoses. The invention further relates to a pressure transmitter assembled using the hose adapter.

## Description

### Technical field

The present invention relates a hose adapter for assembling a pressure transmitter configured to measure pressures and pressure differences of systems, for example air handling systems.

The invention also relates to a system comprising a hose adapter.

### Background

A pressure sensor is a device for pressure measurement of gases, for example air, or liquids, for example oil or water. Pressure expresses the force required to stop a fluid from expanding, and is usually stated in terms of force per unit area. A pressure sensor usually acts as a transducer, and it generates an electric signal as a function of the pressure imposed. Pressure sensor is usually an ambient air pressure referenced.

Differential pressure sensor is a sensor that measures the difference between two pressures, one connected to each side of the sensor. Differential pressure sensors are used to measure many properties, such as pressure drops across oil filters or air filters, fluid levels by comparing the pressure above and below the liquid or flow rates by measuring the change in pressure across a restriction, for example, a choke member installed in the pipe due to which a flow has to pass through the contraction. Most pressure sensors are differential pressure sensors.

Differential pressure sensors and pressure sensors may be used for controlling and monitoring in everyday applications, for example, air handling systems like air ventilation devices. Pressure sensors can also be used to indirectly measure other variables such as fluid/gas flow, speed, water level, and altitude. Pressure sensors can alternatively be called pressure transducers, pressure transmitters, pressure senders, pressure indicators, piezometers and manometers, etc. Some pressure sensors act as pressure switches, which turn on or off at a particular pressure in question, for example, water. For controlling everyday devices, differential pressure sensors and pressure sensors are usually differential pressure transmitters and pressure transmitters, which transmit measured information to be used for controlling the devices over wired or un-wired connections.

Traditionally a pressure transmitter is comprised of individual hoses. Individual hoses are assembled to between a pressure sensor and a wall of a housing of the pressure transmitter. Multiple hoses can be preassembled to transmitter piezotronics (PCB) -assembly, that contains a sensor element, and then the hoses are connected to corresponding adapters in the wall of the housing. This kind of individual assembling of hoses creates, however, a high error possibility when connecting hoses.

### Summary

Now there has been invented an improved technical equipment, a hose adapter, for assembling hoses to pressure transmitters. Various aspects of the invention include a hose adapter and a pressure transmitter comprising a hose adapter, which are characterized by what is stated in the independent claims. Various embodiments of the invention are disclosed in the dependent claims.

According to a first aspect, there is provided a hose adapter for connecting hose connectors inside a housing of a pressure transmitter configured to be used for measuring pressures and pressure differences of a system. The hose adapter comprises two adjacent elastic hoses and two end plates comprising openings for hoses. The first ends of the hoses are configured to be fixed to the openings of the first end plate configured to be connected to pressure sensor connectors of a pressure sensor and the second ends of the hoses are configured to be fixed to the openings of the second end plate configured to be connected to housing measuring connectors.

According to an embodiment, the hose adapter further comprises a second assembling plate between the second ends of the hoses and the second end plate. According to an embodiment, the second assembling plate comprises an assembling opening between the second assembling plate and the second end plate. According to an embodiment, at least the second end plate comprises a guiding opening for a guiding protrusion arranged on the inner surface of the housing between the housing measuring connectors. According to an embodiment, the hose adapter further comprises a first assembling plate between the first ends of the hoses and the first end plate. According to an embodiment, the first assembling plate comprises an assembling opening between the first assembling plate and the first end plate. According to an embodiment, the hose adapter is made of elastomer by injection molding. According to an embodiment, the hose adapter is made of silicone by silicone casting. According to an embodiment, the hose adapter is made by means of additive manufacturing. According to an embodiment, the hose adapter is made from one or combination of multiple materials. According to an embodiment, the hose adapter is manufactured in pre-determined shape other than straight.

According to a first aspect, there is provided a pressure transmitter configured to be used for measuring pressures and pressure differences of a system, which pressure transmitter comprises a hose adapter according to the first aspect and its examples inside its housing, which hose adapter is connected between connectors of a pressure sensor and housing measuring connectors of the pressure transmitter.

According to an embodiment, the pressure transmitter comprises at least two hose adapters connected between connectors of at least two pressure sensors and housing measuring connectors of the pressure transmitter.

### Brief description of the drawings

In the following, various embodiments of the invention will be described in more detail with reference to the appended figures, in which
Figs. 1a-e show a hose adapter for assembling hoses of a pressure transmitter according to an example embodiment;
Fig. 2 shows a pressure transmitter for a hose adapter according to an example embodiment;
Fig. 3a shows a pressure transmitter comprising a single pressure measurement sensor with a hose adapter according to an example embodiment;
Fig. 3b shows a pressure transmitter comprising two pressure measurement sensors with a hose adapter according to an example embodiment;
Fig. 4 shows a pressure transmitter comprising two pressure measurement sensors with hose adapters according to an example embodiment; and
Figs. 5a-d show a hose adapter for assembling hoses of a pressure transmitter according to an example embodiment.

### Detailed description

The present invention relates to hose adapters. A hose adapter is a structure comprising two adjacent hoses connected between end plates arranged in both ends of the hoses of the hose adapter. A hose adapter can be scaled freely on any dimension. The hose adapter is configured to be used for assembling hoses inside a housing of a pressure transmitter configured to be used for measuring pressures and pressure differences of systems, for example air handling systems. There are two hoses between the first end and the second end of the hose adapter. The assembling of hoses comprises forming air flow connections between connectors of a pressure transmitter. The connections are formed inside the housing between pressure sensor connectors of a pressure sensor, into which the first end of a hose adapter is connected, and housing measuring connectors into which the second end of the hose adapter is connected. Through these housing measuring connectors the pressure sensor is configured to receive pressure measurement data outside the pressure transmitter from a system, for example air handling system. The air handling system may be, for example, an air ventilation device or system, an air blower device or system, an air ventilation system, a heating, ventilating and air conditioning (HVAC) system, an air handling unit (AHU), fume hood, or an over or under pressure maintaining device or system in clean rooms etc. A housing of an air pressure transmitter may be fixed i.e. attached, for example, onto a surface of an air duct or an air handling machine.

A pressure transmitter may be used for measuring air volume, air speed, or air pressure from ventilation duct, chambers of a ventilation machine, from different sides of a filter, fans, or room pressure compared to ambient air pressure etc. using traditional air flow sensors like, for example, pitot tube, PP air flow probe or iris damper in the ventilation duct. Based on the pressure loss measurements it is possible to detect clogging of a filter or a heat recovery and adjust, for example, room air speed and/or volumes, fan speeds, room under and over pressure or duct pressures.

A hose adapter according to the present invention has such a structure that it is only possible to make connections between positive connectors and negative connectors of a pressure transmitter i.e. between a positive pressure sensor connector of a pressure sensor and a positive housing measuring connector inside the air pressure sensor and between a negative pressure sensor connector of the pressure sensor and a negative housing measuring connector inside the air pressure sensor. This reduces fail connections compared to situations when one tries to connect separate hoses between positive connectors and negative connectors of the pressure transmitter. This is because the hose adapter has such a structure that if one tries to connect wrong i.e. between positive and negative connectors, the hoses need to be twisted, but the structure of the hose adapter prevents the twisting or makes it harder than making of the connections right. Further, the hose adapter makes the assembling of an air pressure sensor faster, because the risk of making fail connection is very small and therefore it takes less time to make the connections compared to connecting of separate hoses, and because installing one component i.e. the hose adapter to a pressure transmitter is faster than installing separate hoses. Furthermore, due to the above mentioned benefits, the hose adapter further makes the manufacturing cheaper, because assembling by hand is faster due handling surfaces and fail connections are avoided. The hose adapter flat surfaces also makes automated assembly of hoses easier. Hose adapters can be one or many in one pressure transmitter depending on pressure sensor quantity in the transmitter. In other words, it is also possible that one pressure transmitter comprises, for example two, three, four etc. hose adapters each comprising two adjacent hoses in one pressure transmitter, which hose adapters are used for assembling hoses of the transmitter.

A pressure transmitter comprises at least a housing, inside the housing a pressure sensor and at least two air pressure sensor connectors of the pressure sensor, and at least two housing measuring connectors. These connectors are configured to be connected together by a hose adapter according to the present invention. The pressure transmitter further comprises at least two pressure measuring connectors outside the housing, which pressure measuring connectors are arranged on an opposite side of a wall of the housing than the at least two housing measuring connectors inside the housing. The pressure transmitter may further comprise powering means configured to be connected to a power source for receiving power for the pressure transmitter. A power source may be mains or a rechargeable battery or a primary battery. The pressure transmitter may also further comprise data transmitting means, for example, a transmitter or a transceiver, for transmitting measured air pressure data wirelessly or via wired connection to an external data processing unit of a building or industrial or process management system or air handling unit for reading of differential pressure measured by pressure sensor or to a cloud service. It is also possible that a pressure transmitter comprises an internal data processing unit. The internal data processing unit may comprise circuitry and electronics for analysing and/or calculating, computing, receiving and transmitting data, a computer program code in a memory, and a processor which, when running the computer program code, causes the pressure transmitter to determine air pressure or pressures and/or differential pressure to carry out the features of an embodiment. Based on the differential pressure the external or internal data processing unit or the cloud service may adjust air flow of the air handling system accordingly, for example by transmitting a control signal to the air handling system.

The pressure transmitter may further comprise on the inner surface of the housing and between the at least two housing measuring connectors a guiding protrusion for an end plate of a hose adapter plate configured to be connected to housing measuring connectors for preventing insertion of the hose adapter to be twisted so that positive and negative pressure connectors would not cross inside the pressure transmitter.

A hose adapter is arranged to be connected between connectors inside the housing of a pressure transmitter so that a first end of the hose adapter is configured to be connected to a positive pressure sensor connector and negative pressure sensor connector of a pressure sensor and the second end of the hose adapter is configured to be connected to a positive housing measuring connector and negative housing measuring connector, correspondingly. The positive housing measuring connector and negative housing measuring connector are further connected through a wall of the housing of the pressure transmitter to a positive pressure measuring connector and a negative pressure measuring connector, correspondingly. Outside the housing the positive pressure measuring connector and negative pressure measuring connector of the pressure transmitter are configured to be connected, for example, to positive and negative connectors of an air flow probe by pressure measuring hoses (not shown).

A pressure sensor and its positive pressure sensor connector and negative pressure sensor connector, positive housing measuring connector, negative housing measuring connector, a hose adapter connected between pressure sensor connectors and housing measuring connectors form a first pressure measurement unit. A single pressure transmitter may comprise one or two or even more separate pressure measuring units. Measurement unit(s) may be temperature compensated according to the ambient temperature or according to measured medium temperature. The pressure range can be selected separately for measurement of both pressure measurement units.

Thus, assembling method of a pressure transmitter using a hose adapter according to the present invention comprises connecting two hoses of the hose adapter between pressure sensor connectors and housing measuring connectors by connecting the first end of the hose adapter to the pressure sensor connectors and the second end to the housing measuring connectors so that an air channel is formed between positive connectors and negative connectors.

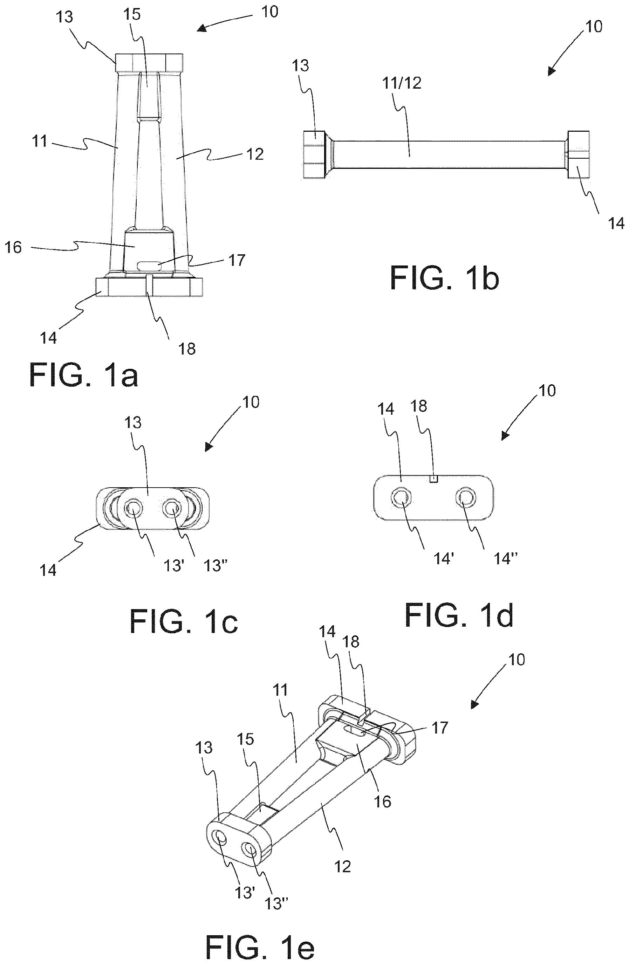

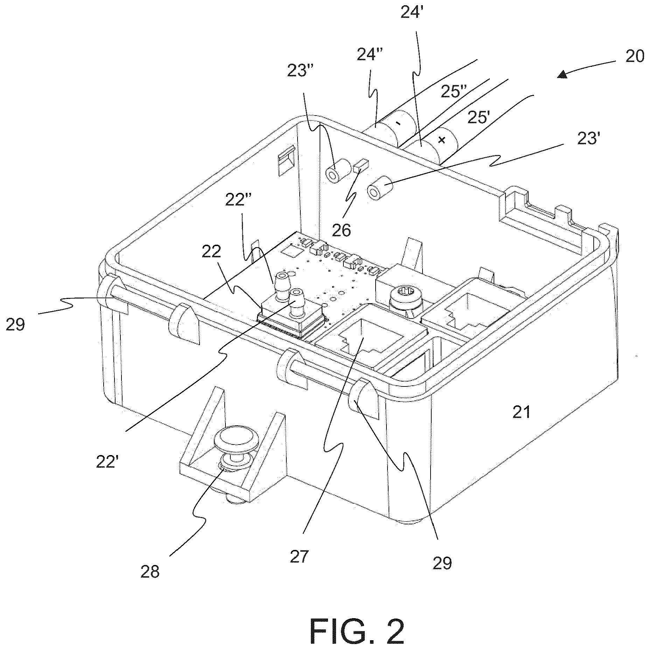

Figs 1a-c show a hose adapter 10 for connecting hoses inside a housing of an a pressure transmitter (shown in figures 2, 3 and 4) according to an example embodiment. The pressure transmitter is configured to be used for measuring pressures and pressure differences of an air handling system.

Figure 1a shows the hose adapter 10 from above. The hose adapter 10 comprises two adjacent elastic hoses 11, 12. There is a space between the hoses 11, 12. The hose adapter 10 also comprises two end plates 13, 14 comprising opening connectors 13', 13" and 14', 14" for hoses 11, 12, correspondingly. The first ends of the hoses 11, 12 are fixed to the opening connectors 13', 13" of the first end plate 13. The first end plate 13 is configured to be connected to pressure sensor connectors of a pressure sensor inside a housing of an an air pressure. The second ends of the hoses 11, 12 are configured to be fixed to the opening connectors 14', 14" of the second end plate 14 that is configured to be connected to housing measuring connectors of the pressure transmitter inside the housing. The opening connectors 13', 13" and 14', 14" are so called socket i.e. female connectors. The distances between two adjacent opening connectors 13', 13" and 14', 14" of the end plates 13, 14 depend on the distances of their target connectors i.e. the distance between the connectors of the pressure sensor and the housing measuring connectors of the housing. The connectors of the pressure sensor and the housing measuring connectors are plug i.e. male connectors.

The hose adapter 10 may further comprise a first assembling plate 15 in the area between the first ends of the hoses 11, 12 and the first end plate 13, and a second assembling plate 16 in the area between the second ends of the hoses 11, 12 and the second end plate 14.

The first assembling plate may comprise an assembling opening (not shown) between the first assembling plate 15 and the first end plate 13, and the second assembling plate 16 may also comprise an assembling opening 17 between the second assembling plate 16 and the second end plate 14 The purpose of the assembling plates, 15, 16 is to ease the connecting of the hose adapter 10 to connectors 13', 13" and 14', 14". The assembling plates, 15, 16 are dimensioned so that also a robot hand can grip or attach to them by using vacuum manipulator for connecting the hose adapter 10. The idea of the assembling openings is to further ease the connecting of the hose adapter 10 by enabling gripping of the assembling plates by tweezers or corresponding.

The second end plate 14 may even further comprise a guiding opening 18 for a guiding protrusion (shown e.g. in figure 2 as 26) arranged on the inner surface of the housing between the housing measuring connectors. The guiding opening 18 is in the upper surface of the end plate 14 i.e. towards a lid of the housing. The idea of the guiding opening 18 is to ensure that the connectors 14', 14" are connected correctly to the housing measuring connectors. It is also possible that the first end plate 13 also comprises a guiding opening i.e. it has a corresponding form as the second end plate 14, i.e. they are symmetrical structures.

The hose adapter 10 of this example is an elastic structure, at least its hoses 11, 12 are elastic. The hose adapter 10 may be made, for example, of elastomer by injection molding or of silicone by silicone casting, or of material, elastic or non-elastic material, by additive manufacturing, for example by 3D printing or of any other suitable material and by any other technical method. It is also possible that the hose adapter 10 is made from one or combination of multiple materials, such as silicone and plastic. Further, it is also possible that other parts of a hose adapter are made of non-elastic material, but the parts which are configured to be connected to pressure sensor connectors and housing measuring connectors of a pressure transmitter are elastic and act as gaskets, or alternatively hoses are non-elastic, but end plates are elastic.

Figure 1b shows the sides of the hose adapter 10. Figure 1b shows only one hose 11 or 12 of the hoses 11, 12, which it is, depends on the position of the hose adapter 10. Also end plates 13, 14 are shown in this figure 1b.

Figure 1c shows the hose adapter 10 from a view of the first end plate 13. The opening connectors 13', 13" of the first end plate 13 are clearly shown. Further, the second end plate 14 can be seen behind the first end plate 13, because it is wider than the first end plate 13.

Figure 1d shows the hose adapter 10 from a view of the second end plate 14. The opening connectors 14', 14" of the second end plate 14 are shown.

Figure 1e shows a perspective view of the hose adapter 10. In figure 1e, there are shown both adjacent elastic hoses 11, 12, both end plates 13, 14, both assembling plates 15, 16, the assembling opening 17, and the guiding opening 18. Also the connectors 13', 13" of the first end plate 13 can be seen from figure 1e.

Figure 2 shows a pressure transmitter 20 showing connectors for a hose adapter according to an example embodiment. The pressure transmitter 20 comprises a housing 21, a pressure sensor 22 with pressure sensor connectors (+) 22', (-) 22", and two housing measuring connectors (+) 23', (-) 23" on an inner surface of a wall of the housing 21. The pressure transmitter 20 further comprises data transmitting means 27 and it may further comprise an inner data processing unit. In this example data transmitting means 26 is an RJ connector, but it may also be, for example, a screw or spring-loaded terminal connector, or any other kind of connector or connecting element. Data may be, for example analogue voltage, current signal, a digital signal or un-wired connection.

A hose adapter is configured to be connected to the pressure transmitter 20 so that connectors of a first end plate of the hose adapter are connected a positive pressure sensor connector 22' and negative pressure sensor connector 22" of a pressure sensor 22 and connectors of a second end plate of the hose adapter are configured to be connected to a positive housing measuring connector 23' and negative housing measuring connector 23", correspondingly. The positive housing measuring connector 23' and negative housing measuring connector 23" are further connected through the wall of the housing 21 of the pressure transmitter 20 to a positive pressure measuring connector 24' and a negative pressure measuring connector 24", correspondingly. Outside the housing 21 the positive pressure measuring connector 24' and the negative pressure measuring connector 24" are configured to be connected, for example, to a positive and negative connectors of an air flow probe (not shown) by pressure measuring hoses 25', 25", which air flow probe is arranged inside a measuring target for measuring air flow. One of measuring hoses 25' or 25" maybe left disconnected for ambient air pressure referenced measuring, such as duct pressure or room over or under pressure. When the hose adapter is connected in place between the pressure sensor connectors 22', 22" and housing measuring connector 23', 23" an air connection is formed from the air flow probe to the pressure sensor 22.

In figure 2, also a guiding protrusion 26 arranged on the inner surface of the housing 21 between the housing measuring connectors 24', 24" is shown. As explained in context of the figure 1a, the guiding protrusion 26 is arranged for a guiding opening (shown e.g. in fig. 1a as 18) for preventing false connecting of the second end of the hose adapter.

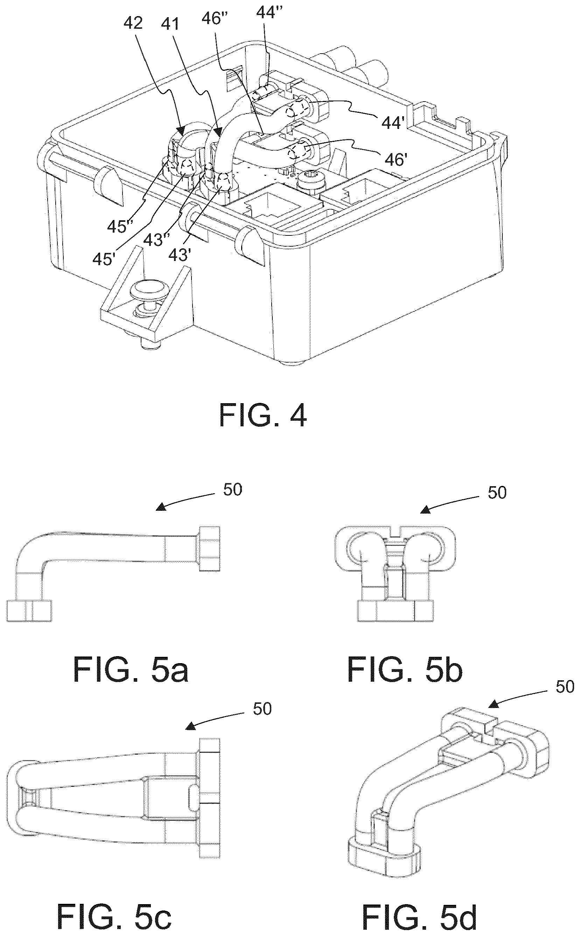

The pressure sensor 22 and its positive pressure sensor connector 22' and negative pressure sensor connector 22", positive housing measuring connector 23', negative housing measuring connector 23", and a hose adapter connected between pressure sensor connectors 22', 22" and housing measuring connectors 23', 23", form a pressure measurement unit. In this example, there is only one pressure measurement unit. In figure 4, it is shown an example, where there are two pressure measurement units.

In figure 2, there are also shown a fixing device 28, which may be used for attaching the pressure transmitter 20 on the surface of an air handling device or an air duct, and hinges 29, which are used for opening and closing a lid (not shown) of the pressure transmitter 20.

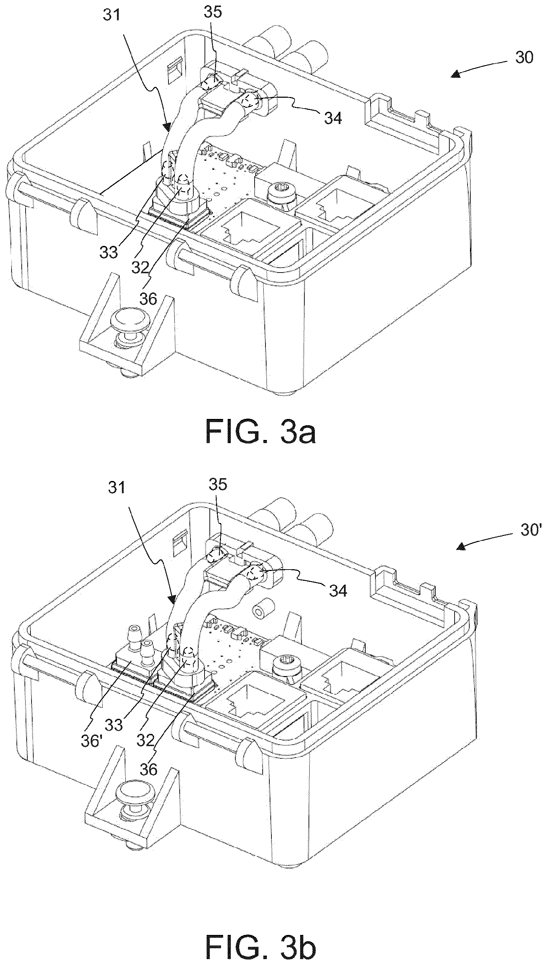

Figure 3a shows a pressure transmitter 30 comprising a hose adapter 31 according to an example embodiment. The pressure transmitter 30 is assembled i.e. the hose adapter 31 is connected between pressure sensor connectors 32, 33 of a pressure sensor 36 and housing measuring connectors 34, 35 so that positive connectors 32, 34 and negative connectors 33, 35 are connected together. In this example, there is not a second measurement unit as in the example of figure 3b below.

Figure 3b shows a pressure transmitter 30' comprising a hose adapter 31 according to an example embodiment. The pressure transmitter 30' is assembled using the hose adapter 31 i.e. the hose adapter 31 is connected between pressure sensor connectors 32, 33 of the first pressure sensor 36 and housing measuring connectors 34, 35 of the pressure transmitter 30' so that positive connectors 32, 34 and negative connectors 33, 35 are connected together. In this example a second measurement unit is not in use i.e. the second pressure sensor 36' with its connectors is not connected to second housing measurement connectors by a second hose adapter.

Figure 4 shows a pressure transmitter 40 comprising two hose adapters 41, 42 according to an example embodiment. The pressure transmitter 40 is assembled i.e. the first hose adapter 41 is connected between pressure sensor connectors 43', 43" of a first pressure sensor 43 and first housing measuring connectors 44', 44" so that positive connectors 43', 44' and negative connectors 43", 44" are connected together, and the second hose adapter 42 is connected between pressure sensor connectors 45', 45" of a second pressure sensor 45 and second housing measuring connectors 46', 46" (only partly shown) so that positive connectors 45', 46' and negative connectors 45", 46" are connected together. Thus, in this example, two measuring units are in use.

Even if examples of hose adapters, for example figures 1a-1e, show a hose adapter having a form of straight and flat before assembling, it is also possible that a hose adapter is manufactured in a pre-determined shape other than straight, for example in a form of 90-degree angle or any other angle or shape. This example embodiment is shown in figures 5a-5d.

Figures. 5a-5d show a pre-shaped hose adapter configured to be used for assembling hoses of a pressure transmitter according to an example embodiment. Figure 5a shows the hose adapter 50 from a side, figure 5b from a view of an end plate, figure 5c from above, and figure 5d shows the hose adapter 50 from a perspective view. The purpose and functionality of the hose adapter 50 corresponds the purpose and functionality of the hose adapter 10 of figures 1a-1e, but this hose adapter 50 is manufactured in pre-determined shape other than straight, the hose adapter 50 has a form of 90-degree angle.

Considerable advantages are achieved by the present invention. By this hose adapter, it is possible to ease and fasten assembling of air pressure sensors. In addition, the hose adapter reduce connecting mistakes and thus ensures the quality of the pressure transmitters.

It is obvious that the present invention is not limited solely to the above-presented embodiments, but it can be modified within the scope of the appended claims.

## Claims

1. A hose adapter (10) for connecting hoses inside a housing (21) of a pressure transmitter (20) configured to be used for measuring pressures and pressure differences of a system, the hose adapter (10) comprises two adjacent hoses (11, 12), **characterized in that** the hose adapter (10) further comprises two elastic end plates (13, 14) comprising opening connectors (13', 13", 14', 14") for hoses (11, 12), the first ends of the hoses (11, 12) are configured to be fixed to the opening connectors (13', 13") of the first end plate (13) configured to be connected to pressure sensor connectors (22', 22") of a pressure sensor (22) and the second ends of the hoses (11, 12) are configured to be fixed to the opening connectors (14', 14") of the second end plate (14) configured to be connected to housing measuring connectors (23', 23").

2. A hose adapter according to claim 1, which hose adapter (10) further comprises a second assembling plate (16) between the second ends of the hoses (11, 12) and the second end plate (14).

3. A hose adapter according to claim 2, wherein the second assembling plate (16) comprises an assembling opening (17) between the second assembling (16) plate and the second end plate (14).

4. A hose adapter according to claim 2 or 3, wherein at least the second end plate (14) comprises a guiding opening (18) for a guiding protrusion (26) arranged on the inner surface of the housing (21) between the housing measuring connectors (23', 23").

5. A hose adapter according to any of the previous claims, which hose adapter (10) further comprises a first assembling plate (15) between the first ends of the hoses (11, 12) and the first end plate (13).

6. A hose adapter according to claim 5, wherein the first assembling plate (15) comprises an assembling opening between the first assembling plate and the first end plate (13).

7. A hose adapter according to any of the claims 1 to 6, which hose adapter (10) is made of elastomer by injection molding.

8. A hose adapter according to any of the claims 1 to 6, which hose adapter (10) is made of silicone by silicone casting.

9. A hose adapter according to any of the claims 1 to 6, which hose adapter (10) is made by means of additive manufacturing.

10. A hose adapter according to any of the claims 1 to 6, which hose adapter (10) is made from one or combination of multiple materials.

11. A hose adapter according to any of the claims 1 to 10, which hose adapter (10) is manufactured in pre-determined shape other than straight.

12. A hose adapter according to any of the claims 1 to 11, which opening connectors (13', 13" 14', 14") are socket connectors.

13. A pressure transmitter (20) configured to be used for measuring pressures and pressure differences of a system, which pressure transmitter (20) comprises a hose adapter (10) according to claim 1 to 12, which hose adapter (10) is connected between connectors (22', 22") of a pressure sensor (22) and housing measuring connectors (23', 23") of the pressure transmitter (20).

14. A pressure transmitter according to claim 13, which pressure transmitter (20, 40) comprises at least two hose adapters (10) connected between connectors (22', 22") of at least two pressure sensors (22) and housing measuring connectors (23', 23") of the pressure transmitter (20).
